# EUROPÄISCHE PATENTANMELDUNG

(11) **EP 2 067 963 A2**
(43) Veröffentlichungstag der Anmeldung: **10.06.2009**
(21) Anmeldenummer: 08021198.0
(22) Anmeldetag: 05.12.2008
(51) Int. Cl.: F02C 7/06, F01D 25/16

(54) **Lagerkammerdrucksystem**

(30) Priorität: 07.12.2007 DE 102007058953
(71) Anmelder: Rolls-Royce Deutschland Ltd & Co KG, 15827 Blankenfelde-Mahlow (DE)
(72) Erfinder: Pisseloup, Arnoud, 10405 Berlin (DE); Giessel, Brian, 15345 Rehfelde (DE)
(74) Vertreter: Weber, Joachim

(57) **Zusammenfassung**

Eine Gasturbine mit einer Lagerkammer mit einer in Axialrichtung hinteren Lageranordnung (1), wobei die Lagerkammer (2) in einer Wandung (3) ein Entlüftungsventil (14) umfasst, mittels dessen die Lagerkammer (2) druckabhängig entlüftbar ist.

## Beschreibung

Die Erfindung bezieht sich auf eine Gasturbinenlagerkammer mit einem Lagerkammerdrucksystem.

Aus dem Stand der Technik ist es bekannt, dass das Gehäuse (die Lagerkammer) des in Axialrichtung (Durchströmungsrichtung) hinteren Lagers nur an seiner Vorderseite eine Luftdichtung aufweist und nicht zusätzlich belüftet ist. Das System stützt sich dabei auf die Kapazität der Rücklaufpumpe, so dass diese sowohl zur Ölrückführung als auch zur Entlüftung dienen muss.

Der Innendruck einer Lagerkammer ergibt sich aus dem Druck der Dichtungsluft minus einem Druckverlust über die Dichtung. Während des Betriebs der Gasturbine ändern sich die Drücke (Dichtungsluft und Innendruck) ständig. Bei einer Reduzierung der Drehzahl der Gasturbine, z.B. beim Abstieg aus einer größeren Flughöhe, bei welchem eine Leerlaufdrehzahl eingestellt wird, sowie noch stärker, beim Abschalten der Gasturbine, liegt jedoch eine Druckumkehr über die Dichtung vor, welche dazu führt, dass Öl aus der Lagerkammer austritt und sich am Ende des Triebwerks durch Ölqualm oder kurzzeitige Ölverbrennung bemerkbar macht. Der Grund für diese Umkehrung der Strömung liegt darin, dass der Dichtungsluftdruck, welche von dem Hochdruckkompressor geliefert wird, sofort absinkt. Wenn jedoch die Lagerkammer mit engen Lagerspalten abgedichtet ist, beispielsweise bei einer Karbondichtung, ergibt sich der interne Druck der Lagerkammer über den Unterdruck den die Rückführpumpe liefert, welcher nicht so schnell absinkt, wie der Dichtungsluftdruck. Deshalb gibt es Zustände, in denen der Druck in der Lagerkammer höher sein kann, als der Dichtungsluftdruck. Wenn die Dichtung nicht einem Minimum von negativem Druckprofil standhalten kann, ergibt sich die Situation, dass Öl aus der Lagerkammer durch die umgekehrte Strömungsrichtung durch die Dichtung austritt.

Der Stand der Technik sieht deshalb eine verstärkte Ölrückführung vor, beispielsweise größere Ölrückführpumpen und verbesserte Ölsammeleinrichtungen. Weiterhin wird versucht, den Dichtungsluftdruck zu reduzieren, um den Lagerkammerdruck auf ein niedrigeres Niveau zu bringen. Dieses verringert auch die Wahrscheinlichkeit einer Druckumkehr über die Dichtung während einer Drehzahlverringerung oder Abschalten der Gasturbine.

Aus dem Stand der Technik sind auch Dichtungen mit größerer Kapazität bekannt, welche einem negativen Druck (Druckumkehr) standhalten können.

Der Erfindung liegt die Aufgabe zugrunde, eine Lagerkammeranordnung zu schaffen, welche bei einfachem Aufbau und einfacher, betriebssicherer Wirkungsweise die Nachteile des Standes der Technik vermeidet und einen Ölaustritt durch eine Strömungsumkehr über die Dichtung verhindert.

Erfindungsgemäß wird die Aufgabe durch die Merkmalskombination des Anspruchs 1 gelöst, die Unteransprüche zeigen weitere vorteilhafte Ausgestaltungen der Erfindung.

Die vorliegende Erfindung bezieht sich insbesondere auf in Strömungsrichtung hinten angeordnete Lagerkammern, welche nicht entlüftet sind und welche nur eine Dichtung haben. Das Ziel der Erfindung ist, ein System zu schaffen, welches einen schnellen Druckausgleich der hinteren Lagerkammern, insbesondere bei einer Drehzahlverringerung oder Abschalten der Gasturbine, ermöglicht. Somit fällt der Innendruck der Lagerkammer auf einen Wert ab, welcher so nahe wie möglich an dem Dichtungsdruckluft oder sogar unter diesem liegt, so dass keine oder nur eine geringe Strömungsumkehr auftritt, welche von der Dichtung ertragen werden kann, ohne dass Öl aus der Lagerkammer austritt.

Das Grundprinzip der Erfindung sieht ein zusätzliches Entlüftungsventil in der Lagerkammer vor. Dieses kann vorzugsweise mit einer Entlüftungsleitung verbunden sein. Es ist in bevorzugter Weiterentwicklung der Erfindung auch möglich, das Ventil mit einem Ölabscheider zu verbinden oder die Entlüftung durch das Entlüftungsventil in eine Bypassleitung vorzunehmen. Eine weitere erfindungsgemäße Variante besteht darin, die Entlüftung in einem Hohlraum vorzunehmen, der in einem Abgaskonus vorhanden ist, welcher wiederum über ein zweites Entlüftungsventil mit der Umgebung verbindbar ist.

Das erfindungsgemäße Entlüftungsventil kann ein einfaches Druckbegrenzungsventil sein, welches so eingestellt ist, dass es sich öffnet, wenn eine Druckdifferenz zwischen dem Druck in der Lagerkammer und dem Lagerluftdruck über einem Minimalwert liegt, der zu einer Drehzahlreduzierungsphase der Gasturbine oder zu einem Abschalten der Gasturbine korrespondiert.

Das Entlüftungsventil kann auch so ausgebildet sein, dass es auf den gleichen Differentialdruck eingestellt ist, jedoch vom System mit höherem Druck betätigt wird. D.h., entweder durch den Dichtungsluftdruck während des normalen Betriebs der Gasturbine (mit Ausnahme eines Drehzahlreduzierungszustandes) oder durch den Lagerkammerdruck während einer Drehzahlreduzierung oder einem Abschalten der Gasturbine.

Wegen des geringen Druckes (geringfügig höher als der Umgebungsdruck) in der Lagerkammer beim Abschalten der Gasturbine kann es sich als schwierig erweisen, eine Luftströmung durch eine Entlüftungsleitung zu dem Ölabscheider oder einer Bypassleitung oder direkt in das Abgas (am Ende des Abgaskonus) zu erzielen. Die Strömung müsste den Druckverlust durch das Entlüftungsventil, die Entlüftungsleitungen und den Ölabscheider überwinden, wenn die Verbindung zu dem Ölabscheider oder der Bypassleitung erfolgt. Eine derartige Entlüftungsleitung würde möglicherweise einen Ejektor benötigen. Aus diesem Grunde kann es bei bestimmten Anwendungen besonders vorteilhaft sein, die Entlüftung der Lagerkammer direkt in die Bypassleitung vorzunehmen oder diese nach hinten in den Abgaskonus zu entlüften. Dies kann sich als sehr effektiv erweisen, da die Luftströmung eine Druckdifferenz aufweist.

Im Folgenden wird die Erfindung anhand von Ausführungsbeispielen in Verbindung mit der Zeichnung beschrieben. Dabei zeigt:
- Fig. 1: eine vereinfachte Darstellung der hinteren Lagerkammern mit Entlüftung durch einen Abgaskonus,
- Fig. 2: ein Ausführungsbeispiel mit Entlüftung durch einen Ölabscheider,
- Fig. 3: ein Ausführungsbeispiel mit Entlüftung in eine Bypassleitung,
- Fig. 4: ein Ausführungsbeispiel mit Entlüftung in einen Abgaskonus.

Bei den Ausführungsbeispielen werden gleiche Teile mit gleichen Bezugsziffern versehen.

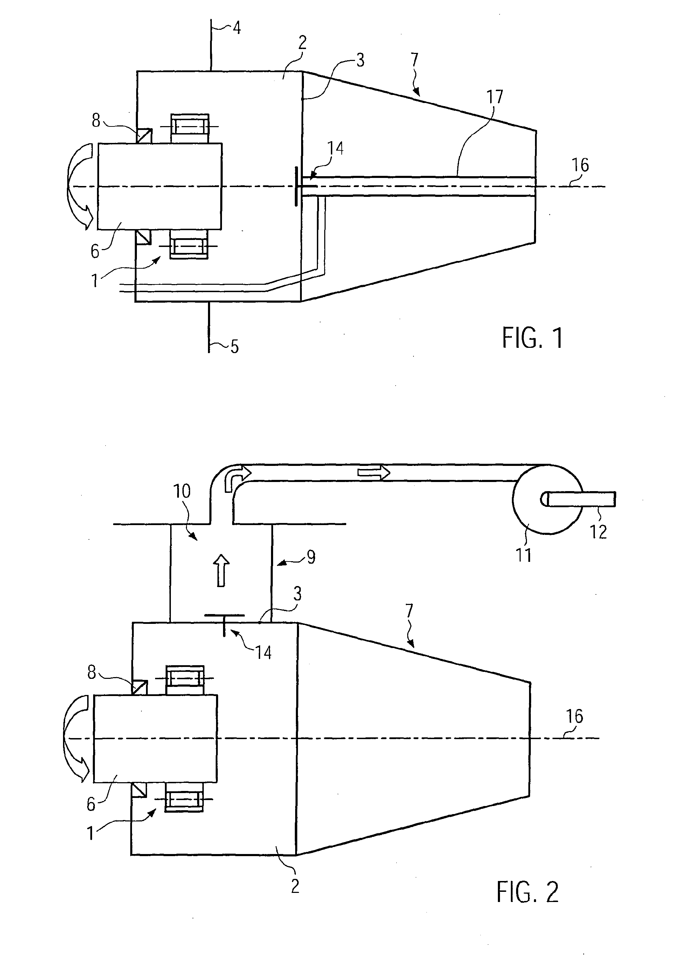

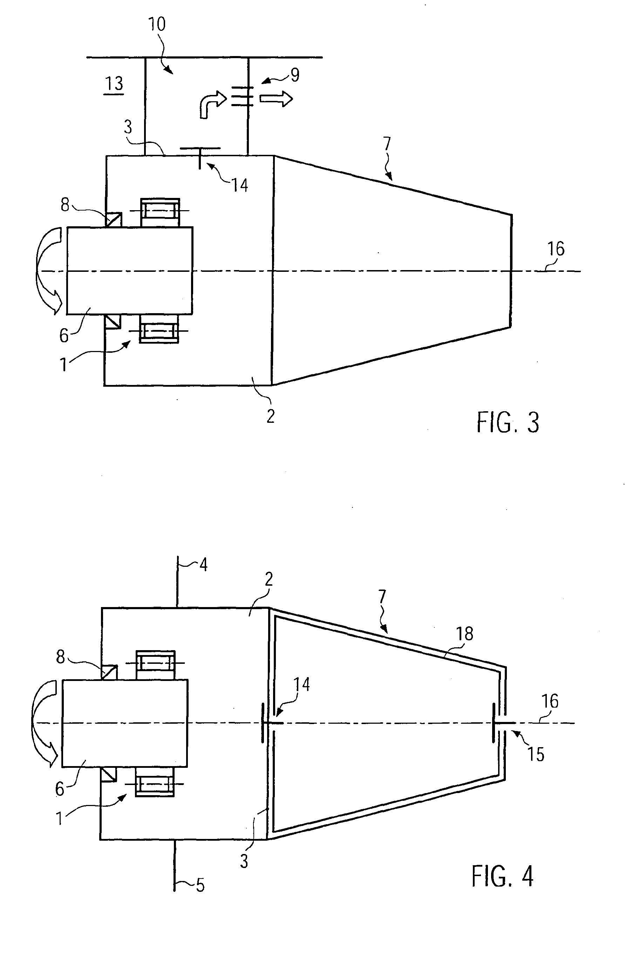

Die Fig. 1 zeigt eine Lageranordnung 1, welche in einer Lagerkammer 2 angeordnet ist. Die Lagerkammer 2 umfasst eine Wandung 3. In den Fig. 1 und 4 sind eine Ölzufuhrleitung 4 und eine Ölrückführleitung 5 dargestellt. Eine rotierende Welle ist mit dem Bezugszeichen 6 versehen. An die Lagerkammer 2 schließt sich ein Abgaskonus 7 an. Mit dem Bezugszeichen 8 ist eine Luftdichtung dargestellt. Insofern entspricht der Aufbau den aus dem Stand der Technik bekannten Konstruktionen, so dass es auf eine detaillierte weitere Beschreibung an dieser Stelle verzichtet werden kann.

Die Fig. 1 zeigt ein Ausführungsbeispiel, bei welchem eine Entlüftung durch den rückwärtigen Abgaskonus 7 erfolgt. Dieses Ausführungsbeispiel verwendet ein Entlüftungsventil 14, welches an einer Wandung, angrenzend an den Abgaskonus 7, angeordnet ist, vorzugsweise auf der Mittellinie der Drehachse oder über dieser, um die Menge einer Ölleckage bei statischem Zustand der Gasturbine zu begrenzen. Das Entlüftungsventil 14 entlüftet durch ein Entlüftungsrohr 17, welches sich zentrisch durch den Abgaskonus zur Umgebung hin erstreckt.

Die Fig. 2 und 3 zeigen andere Ausführungsbeispiele, bei welchen das Entlüftungsventil 14 durch die hintere Stützstrebe 10 entlüftet wird. Die Stützstrebe 10 sollte aus Sicherheitsgründen mit einer doppelten Wandung vorgesehen werden.

Die Entlüftung erfolgt dann (Fig. 2) über eine Leitung zu einem Ölabscheider 11 und dessen Entlüftung 12.

Bei dem Ausführungsbeispiel der Fig. 3 erfolgt die Entlüftung über ein Ejektorsystem 9 aus der hinteren Sützstrebe 10 in eine Bypassleitung 13.

Die Fig. 4 zeigt ein weiteres Ausführungsbeispiel, bei welchem ein Hohlraum in dem Abgaskonus 7 verwendet wird. Eine Entlüftung erfolgt mittels des Entlüftungsventils 14 in die innere Kammer 18 des Abgaskonus 7. Zur Entlüftung in die Umgebung ist ein zweites Entlüftungsventil 15 vorgesehen. Diesem Ausführungsbeispiel liegt das Prinzip zugrunde, einen Druckabfall in die innere Kammer 18 zu bilden, so dass, wenn der Druck in der Lagerkammer den Dichtungsluftdruck überschreitet, das Entlüftungsventil 14 an der Zwischenfläche zwischen der Lagerkammer 2 und der inneren Kammer 18 sich öffnet und den Druck von der Lagerkammer in die innere Kammer 18 abbaut. Dies erfordert, dass der Druck in der inneren Kammer 18 niedriger ist als der Druck in der Lagerkammer. Um dies zu erreichen, ist das zweite Entlüftungsventil 15 am anderen Ende des Abgaskonus 7 vorgesehen, so dass die innere Kammer 18 bei großen Flughöhen, bei welchen der Druck geringer ist, als bei einer Drehzahlreduzierung der Gasturbine beim Abstieg oder bei einem Abschalten der Gasturbine beim normalen Betrieb am Grund, entlüftet wird. Diese Lösung erfordert die Zugrundelegung einer logischen Schaltung (Regelung oder Steuerung) für das Öffnen und Schließen der Entlüftungsventile 14 und 15. Die Schaltung kann dabei nach folgender Maßgabe arbeiten:

| Betriebszustand | Entlüftungsventil 14 | Entlüftungsventil 15 |
|---|---|---|
| Rollen des Flugzeuges | geschlossen | geschlossen |
| Take off (MTO) | geschlossen | geschlossen |
| Steigen (MCL) | geschlossen | geschlossen |
| Reiseflug (MCR) | geschlossen | offen |
| Beginn des Sinkens | offen | geschlossen |
| Sinken | geschlossen | offen |
| Approach und Landung | geschlossen | geschlossen |
| Umkehrschub | geschlossen | geschlossen |
| Rollen des Flugzeugs | geschlossen | geschlossen |
| Abschalten | offen | geschlossen |

Erfindungsgemäß erweist es sich als besonders günstig, wenn die Reaktionszeit des Entlüftungsventils 14 kürzer ist als die Zeit, welche zur Drehzahlreduzierung des Hochdruckkompressors der Gasturbine ermöglicht wird, um eine Strömungsumkehrung über die Dichtung der Lageranordnung zu verhindern.

Erfindungsgemäß wird somit eine Ölleckage vermieden, die durch eine Strömungsumkehr über die Dichtung auftreten könnte, wenn die Drehzahl der Gasturbine reduziert wird oder diese abgeschaltet wird.

Weiterhin erweist es sich als besonders vorteilhaft, dass durch die Entlüftung über den Ölabscheider oder die Bypassleitung oder über das Ende des Abgaskonus keine Ölspuren am Außenbereich der Lagerkammer oder an der Verkleidung des Triebwerkes auftreten.

Erfindungsgemäß ergeben sich eine Verbesserung des Ölrückführsystems sowie eine Reduzierung des Ölverlustes, wodurch der Ölverbrauch reduziert wird.

### Bezugszeichenliste

- 1: Lageranordnung
- 2: Lagerkammer
- 3: Wandung
- 4: Ölzuführleitung
- 5: Ölrückführleitung
- 6: Welle
- 7: Abgaskonus
- 8: Luftdichtung
- 9: Ejektorsystem
- 10: hintere Stützstrebe
- 11: Ölabscheider
- 12: Ölabscheiderentlüftung
- 13: Bypassleitung
- 14: Entlüftungsventil
- 15: zweites Entlüftungsventil
- 16: Mittellinie/Drehachse
- 17: Entlüftungsrohr
- 18: innere Kammer

## Patentansprüche

1. Gasturbine mit einer Lagerkammer mit einer in Axialrichtung hinteren Lageranordnung (1), **dadurch gekennzeichnet, dass** die Lagerkammer (2) in einer Wandung (3) ein Entlüftungsventil (14) umfasst, mittels dessen die Lagerkammer (2) druckabhängig entlüftbar ist.

2. Gasturbine nach Anspruch 1, **dadurch gekennzeichnet, dass** die Entlüftung in eine Entlüftungsleitung (16) erfolgt.

3. Gasturbine nach Anspruch 1, **dadurch gekennzeichnet, dass** eine Entlüftung in einen Ölabscheider (11) erfolgt.

4. Gasturbine nach Anspruch 1, **dadurch gekennzeichnet, dass** eine Entlüftung in eine Bypassleitung (13) erfolgt.

5. Gasturbine nach Anspruch 1, **dadurch gekennzeichnet, dass** eine Entlüftung in einen Abgaskonus (7) erfolgt.

6. Gasturbine nach einem der Ansprüche 1 bis 5, **dadurch gekennzeichnet, dass** das Entlüftungsventil (14) als Druckbegrenzungsventil ausgebildet ist.

7. Gasturbine nach einem der Ansprüche 1 bis 5, **dadurch gekennzeichnet, dass** das Entlüftungsventil (14) als steuerbares Ventil ausgebildet ist.

8. Gasturbine nach einem der Ansprüche 1 bis 7, **dadurch gekennzeichnet, dass** die Reaktionszeit des Entlüftungsventils (14) kürzer ist, als die Zeit zur Drehzahlreduzierung eines Hochdruckkompressors der Gasturbine bei einer Drehzahlreduzierung der Gasturbine oder bei einem Abschalten der Gasturbine.
